# EUROPÄISCHE PATENTSCHRIFT

(11) **EP 0 883 361 B1**
(45) Veröffentlichungstag und Bekanntmachung des Hinweises auf die Patenterteilung: **27.03.2002**
(21) Anmeldenummer: 97910355.3
(22) Anmeldetag: 25.09.1997
(51) Int. Cl.: A46D 9/00, F16J 15/32

(54) **VERFAHREN UND VORRICHTUNG ZUM HERSTELLEN VON BÜRSTENDICHTUNGEN**
METHOD AND DEVICE FOR PRODUCING BRUSH SEALS
PROCEDE ET DISPOSITIF POUR LA FABRICATION DE JOINTS A BROSSE

(30) Priorität: 08.10.1996 DE 19641375
(43) Veröffentlichungstag der Anmeldung: 16.12.1998
(73) Patentinhaber: MTU Aero Engines GmbH, 80995 München (DE)
(72) Erfinder: MAYR, Alfred, D-85244 Röhrmoos (DE); HAGG, Dieter, D-85757 Karlsfeld (DE)
(74) Vertreter: Einsele, Rolf W.
(86) Internationale Anmeldenummer: EP9705259
(87) Internationale Veröffentlichungsnummer: WO9815210

(56) Entgegenhaltungen:
- EP-A- 0 211 275
- EP-A- 0 213 341
- WO-A-96/16287
- GB-A- 2 021 210
- US-A- 5 165 758
- US-A- 5 183 197

## Beschreibung

Die Erfindung betrifft ein Verfahren zum Herstellen von Bürstendichtungen, wie insbesondere Metall-Bürstendichtungen. Des weiteren befaßt sich die Erfindung mit einer Vorrichtung zum Herstellen solcher Bürstendichtungen nach dem Oberbegriff des Anspruchs 9.

Bei der Herstellung von Bürstendichtungen insbesondere aus Metall mit schräggestellten Borsten müssen deren Schrägstellung bewirkt und die Bürsten verdichtet werden. Dies wird bei derzeit in der Praxis angewandten Herstellungsverfahren mit zwei Glühprozessen erreicht. Der erste Glühprozeß dient der Schrägstellung der Metallborsten, und der zweite Glühprozeß dient dem Verdichten der gerundeten Bürste, die dann am Innendurchmesser geschliffen wird.

So ist aus der EP 0 211 275 B1 ein Verfahren zur Herstellung einer Bürstendichtung bekannt, deren Borsten in einer vorzugsweise als Haltering ausgebildeten Fassung befestigt sind. Hierzu wird in einem Schritt A) zunächst ein aus Borstenmaterial bestehender Faden über zwei parallel mit Abstand voneinander angeordnete langgestreckte Dorne zu einer dichten, etwa ovalen Querschnitt aufweisenden Fadenpackung gewickelt. Dann wird die Fadenpackung in einem Schritt B) auf den beiden Dornen durch Aufstecken von Klemmleisten an den Scheiteln gefaßt. In einem Schritt C) wird die Fadenpackung in einem Schnitt parallel zu den Dornen durchtrennt, so daß zwei sich gegenüberliegende, vorzugsweise mit gleich langen Borsten ausgestattete gerade Bürstenhalbzeuge entstehen. Diese werden schließlich in einem Schritt D) in die gewünschte Bürstenkontur, insbesondere in Kreisbogenform, gebogen, und zu einem geschlossenen Ring zusammengefügt.

Zur Erzielung einer Schrägstellung der Borsten in ihrer Fassung werden vor dem Verfahrensschritt B) die mit der Fadenpackung bewickelten Dorne in Längsrichtung gegeneinander versetzt. In diesem Zusammenhang ist es dem Fachmann bekannt, bei Verwendung von z.B. Metallborsten zur Konservierung deren Schräglage ein Rekristallisationsglühen durchzuführen. Dieser erste Glühschritt vor dem Trennen der Fadenpackung zur Herstellung von Bürstenhalbzeugen wird materialabhängig beispielsweise bei 720 °C durchgeführt.

Nach dem Schritt D) ist bei Verwendung von Metallborsten in der Praxis ein zweiter Glühschritt erforderlich, um die soweit hergestellten Bürsten zu kompaktieren und ihre axiale Maßhaltigkeit einzustellen.

Bei diesem Stand der Technik ist es bereits grundsätzlich aufwendig, zwei getrennte Glühschritte durchführen zu müssen. Ferner ist insbesondere das für den ersten Glühschritt erforderliche Umrüsten der gewickelten Fadenpackung auf eine Glühvorrichtung kompliziert, umständlich und handwerklich aufwendig.

Es ist ein Ziel der vorliegenden Erfindung, das Herstellungsverfahren für Metall-Bürstendichtungen zu vereinfachen.

Dieses Ziel wird mit einem Herstellungsverfahren für Bürstendichtungen nach dem Anspruch 1 erreicht.

Es wird also zunächst eine Bürstendichtung mit einer Bürste ohne Schrägstellung der Drähte oder Borsten in der späteren Laufrichtung mit überlagerten Borstenschäften auf herkömmliche Weise auf Fertigmaß bearbeitet hergestellt, wobei jedoch keine Glühbehandlungen vorgenommen werden. Bei oder nach der Montage der Bürstendichtung auf einer neuartigen Glühvorrichtung wird die angestrebte radiale Anstellung durch Verdrehen auf z.B. 45 ° eingestellt. Da das erfindungsgemäße Verfahren den Vorteil hat, daß gleichzeitig mehrere Bürstendichtungen behandelt werden können, wie später im Zusammenhang mit einer bevorzugten Weiterbildung noch angegeben wird, kann nun beispielsweise ein Distanzring auf dem Borstenpacket der bereits montierten und ggf. eingestellten Bürstendichtung montiert werden.

Nunmehr kann gemäß der bereits angesprochenen Weiterbildung die Montage weiterer 2. bis beispielsweise 20. Bürstendichtungen gemäß den bisherigen Verfahrensschritten erfolgen. Abschließend wird dann ein Spanndeckel montiert, der die gestapelten Bürstendichtungen zusammenhält.

Mit den in angestrebter Weise schräggestellten Borsten der Bürstendichtungen wird nun ein Rekristallisationsglühen z.B. bei 780 °C für 60 min ausgeführt, bevor die Bürstendichtungen nach dem Abkühlen der Glühwand wieder aus Glühvorrichtung ausgebaut werden.

Mit Hilfe des neuen Glühverfahrens können die Schrägstellung der Borsten und der Innendurchmesser der Bürste in einem Arbeitsgang hergestellt werden. Dadurch entfallen die beiden beim Stand der Technik während der Vorfertigung durchgeführten Glühprozesse sowie die hierfür erforderlichen aufwendigen Glühvorrichtungen vollständig und werden durch einen neuartigen Glühprozeß der im übrigen fertig bearbeiteten Bürstendichtung ersetzt. Auch das gesonderte Schleifen des Innendurchmessers der Bürstendichtung ist nicht mehr zwingend notwendig.

Vorzugsweise ist bei dem erfindungsgemäßen Verfahren zum Herstellen von ringförmigen Bürstendichtungen mit schräggestellten Borsten weiter vorgesehen, daß der Schritt b) 2) gleichzeitig mit dem Schritt b) 1) durchgeführt wird. Damit wird die Einrichtzeit der wenigstens einen Bürstendichtung mit korrekt schräggestellten Borsten in der Glühvorrichtung minimiert. Außerdem führt das kombinierte Drehverstellen zu einem besonders effektiven und störungsfreien Einrichten der Bürstendichtung mit korrekt schräggestellten Borsten in der Glühvorrichtung.

Alternativ zu der vorerwähnten Weiterentwicklung kann aber insbesondere in Abhängigkeit von der Form der Glühwand auch vorgesehen sein, daß der Schritt b) 2) durchgeführt wird, nachdem das Positionieren der wenigstens einen Bürstendichtung und der aufheizbaren Glühwand der Glühvorrichtung relativ zueinander beim Schritt b) 1) vollständig abgeschlossen wurde.

Bevorzugte Schrägstellungen der Borsten der Bürstendichtung sind derart, daß die Borsten beim Schritt b) 2) gegenüber den Radien der ringförmigen Bürstendichtung in deren Ebene um einen Winkel zwischen etwa 15 ° bis ungefähr 75 °, insbesondere zwischen etwa 30 ° bis ungefähr 60 °, und vorzugsweise von ungefähr 45 ° schräggestellt werden.

In Abhängigkeit vom Material der Borsten, wie z.B. Metallborsten, ist es bevorzugt, wenn die aufheizbare Glühwand beim Schritt c) auf eine Temperatur zwischen etwa 500 °C und ungefähr 1000 °C, insbesondere zwischen etwa 700 °C und ungefähr 800 °C, und vorzugsweise zwischen etwa 720 °C und ungefähr 780 °C aufgeheizt wird, und/oder wenn die beim Schritt c) erreichte Temperatur der aufgeheizten Glühwand beim Schritt d) für eine Zeitspanne von etwa 30 min bis ungefähr 90 min, insbesondere etwa 45 min bis ungefähr 75 min und vorzugsweise ungefähr 60 min beibehalten wird.

Gemäß einer weiteren Fortentwicklung der Erfindung werden eine Mehrzahl von z.B. Metall-Bürstendichtungen miteinander ausgerichtet und gleichzeitig gemeinsam bearbeitet, wobei auf diese Möglichkeit bereits weiter oben hingewiesen wurde. Insbesondere kann der neue Glühprozeß mit bis zu zehn, zwanzig aber auch mehr Bürsten simultan auf einer Vorrichtung durchgeführt werden. Dazu ist erfindungsgemäß vorgesehen, daß vor dem Schritt c) des Aufheizens der Glühwand eine Mehrzahl von gemäß Schritt a) bereitgestellten Bürstendichtungen und die aufheizbare Glühwand der Glühvorrichtung nach Schritt b) 1) relativ zueinander positioniert sowie nach Schritt b) 2) gleichzeitig oder danach diese Bürstendichtungen und zumindest die aufheizbare Glühwand relativ gegeneinander verdreht werden, bis die Borsten gegenüber den Radien der ringförmigen Bürstendichtung in deren Ringebene um einen vorgebbaren Winkel schräggestellt sind.

Eine weitere Lösung der der Erfindung zu Grunde liegenden Aufgabe besteht in einer Herstellungsvorrichtung für ringförmige Bürstendichtungen, wie beispielsweise Metall-Bürstendichtungen, nach dem Anspruch 9.

Mit Hilfe der neuen Glühvorrichtung können die Schrägstellung der Borsten und der Innendurchmesser der Bürste in einem Arbeitsgang hergestellt werden. Dadurch entfallen gegenüber dem Stand der Technik ein Glühprozeß sowie die hierfür erforderliche aufwendige Glühvorrichtung vollständig und auch das gesonderte Schleifen des Innendurchmessers der Bürstendichtung ist nicht mehr zwingend notwendig.

Gemäß einer bevorzugten Weiterbildung der erfindungsgemäßen Vorrichtung ist die aufheizbare Glühwand die Außenwand eines Glühdorns, auf den die wenigstens eine ringförmige Bürstendichtung aufsetzbar ist. Diese Ausgestaltung ist besonders abgestimmt auf und daher in vorteilhafter Weise geeignet für die Behandlung von Bürstendichtungen mit einwärts gerichteten Borsten.

Bei einer vorzugsweisen Weiterbildung der vorstehend angegebenen Ausgestaltung der Erfindung ist vorgesehen, daß der Glühdorn im wesentlichen zylinderförmig ist und in seinem zum Aufstecken der wenigstens einen ringförmigen Bürstendichtung ausgelegten und seinem Montageende in der Glühvorrichtung entgegengesetzt liegenden freien Endbereich einen konusförmigen Aufweitkegel hat. Dessen Außendurchmesser nimmt vom freien Ende des Glühdoms in Richtung auf dessen Montageende in der Glühvorrichtung hin zu, wobei der maximale Außendurchmesser des Glühdorns zumindest im wesentlichen dem Innendurchmesser der fertigzustellenden ringförmigen Bürstendichtung mit schräggestellten Borsten entspricht. Durch diese Ausgestaltung des Glühdorns wird in vorteilhafter Weise einerseits das Aufsetzen der Bürstendichtung auf den Glühdorn und andererseits das Schrägstellen deren Borsten erleichtert.

Die Handhabung der Bürstendichtung insbesondere beim Aufsetzen auf den Glühdorn ist besonders einfach und sicher, wenn die Glühvorrichtung eine Halterung zum Fassen der wenigstens einen Bürstendichtung enthält..

Dies ist mit Vorteil dahingehend weiterzubilden, die Halterung zum Aufnehmen einer Mehrzahl von axial miteinander ausgerichteten Bürstendichtungen zwischen letztere einsetzbare Distanzteile, wie Distanzringe, enthält, die ein sicheres und exaktes Halten der einzelnen Bürstendichtungen sowie Schrägstellen deren Borsten gewährleisten.

Um das Verstellen der wenigstens einen Bürstendichtung und der aufheizbaren Glühwand der Glühvorrichtung genau durchführen zu können, ist es bevorzugt, wenn die Glühvorrichtung insbesondere steuerbare Antriebseinrichtungen enthält, die zum Verstellen der wenigstens einen Bürstendichtung und der aufheizbaren Glühwand der Glühvorrichtung relativ zueinander ausgelegt sind, um die wenigstens eine Bürstendichtung und die aufheizbare Glühwand der Glühvorrichtung relativ zueinander zu positionieren und/oder um die wenigstens eine Bürstendichtung und zumindest die aufheizbare Glühwand relativ gegeneinander zu verdrehen, bis die Borsten gegenüber den Radien der ringförmigen Bürstendichtung in deren Ebene um einen vorgebbaren Winkel schräggestellt sind. Eine Weiterbildung davon sieht vor, daß die Antriebseinrichtungen insbesondere zum Verstellen der aufheizbaren Glühwand sowie vorzugsweise zum Verstellen mit konstantem Vorschub und/oder konstanter Drehzahl ausgelegt sind.

Um die aufheizbare Glühwand der Glühvorrichtung auf eine angestrebte Temperatur bringen zu können, sind vorzugsweise insbesondere steuerbare Heizeinrichtungen enthalten, mittels derer zumindest die aufheizbaren Glühwand der Glühvorrichtung auf eine Temperatur zwischen etwa 500 °C und ungefähr 1000 °C, insbesondere zwischen etwa 700 °C und ungefähr 800 °C, und vorzugsweise zwischen etwa 720 °C und ungefähr 780 °C aufheizbar ist.

Die Vorrichtung ist dann eine besonders genaue und einfache Handhabung und Bearbeitung der wenigstens einen Bürstendichtung, wenn die Glühvorrichtung eine Steuerung enthält, die das Aufheizen der aufheizbaren Glühwand und das Beibehalten der dabei angestrebten Temperatur für eine Zeitspanne von etwa 30 min bis ungefähr 90 min, insbesondere etwa 45 min bis ungefähr 75 min und vorzugsweise ungefähr 60 min steuert. Vorzugsweise steuert die Steuerung auch einen Abkühlvorgang der aufheizbaren Glühwand der Glühvorrichtung.

Um ggf. unerwünschte Verformungen oder Überlängen der geglühten Borsten entfernen zu können, ist es von Vorteil, Nachbearbeitungseinrichtungen zur Nachbearbeitung des Funktionsdurchmessers der Bürste der wenigstens einen Bürstendichtung nach der Glühbehandlung vorzusehen, wie es entsprechend einer anderen Fortbildung der Erfindung der Fall ist.

Wenn bei einer weiteren Ausgestaltung der Vorrichtung eine Verdrehsicherung verwendet wird, die die wenigstens eine Bürstendichtung relativ zur Glühvorrichtung in ihrer Lage mit schräggestellten Bürsten hält, ist sichergestellt, daß beim Glühvorgang kein selbsttätiges Verstellen der Bürstensicherung auftritt. Dabei kann die Verdrehsicherung einerseits an der Glühvorrichtung oder der wenigstens einen Bürstendichtung oder ggf. insbesondere an der Halterung und andererseits an der wenigstens einen Bürstendichtung bzw. der Glühvorrichtung angreifen.

Weitere vorteilhafte und bevorzugte Ausgestaltungen der Erfindung ergeben sich aus den abhängigen Ansprüchen und deren Kombinationen.

Die Erfindung wird nachfolgend zur Verdeutlichung anhand von Ausführungsbeispielen unter Bezugnahme auf die Zeichnung genau beschrieben, in der:
- Fig. 1: eine Draufsicht auf eine Ausführungsform einer Bürstendichtung mit radial verlaufenden Borsten einer solchen Länge zeigt, die durch Schrägstellung der Borsten gegenüber den Radien der ringförmigen Bürstendichtung zumindest im wesentlichen zum angestrebten Bürstendurchmesser führt,
- Fig. 2: eine perspektivische Ansicht eines Teils der in der Fig. 1 dargestellten Bürstendichtung ist,
- Fig. 3: eine Draufsicht auf die in der Fig. 1 dargestellte Bürstendichtung jedoch mit den Borsten im schräggestellten Zustand zeigt, wie sie durch das Erfindungsverfahren und mittels der Vorrichtung zum Herstellen von Bürstendichtungen mit schräggestellten Borsten nach der Erfindung herstellbar sind,
- Fig. 4: eine perspektivische Ansicht eines Teils der in der Fig. 3 dargestellten Bürstendichtung verdeutlicht,
- Fig. 5: einen schematischen Querschnitt durch eine an einer drehbaren Welle angebrachte Bürstendichtung zeigt,
- Fig. 6: einen schematischen Querschnitt durch ein Ausführungsbeispiel einer Vorrichtung zum Herstellen von Bürstendichtungen mit schräggestellten Borsten darstellt,
- Fig. 7: eine schematische Draufsicht auf die in der Fig. 6 dargestellte Vorrichtung zum Herstellen von Bürstendichtungen mit schräggestellten Borsten vor dem Zusammenführen mit der in der Fig. 1 gezeigten Bürstendichtung zeigt, und
- Fig. 8: eine schematische Draufsicht auf die in der Fig. 6 dargestellte Vorrichtung zum Herstellen von Bürstendichtungen mit schräggestellten Borsten nach dem Zusammenführen mit der in der Fig. 1 gezeigten Bürstendichtung und der Relativdrehung zwischen letzterer und der Glühvorrichtung zeigt.

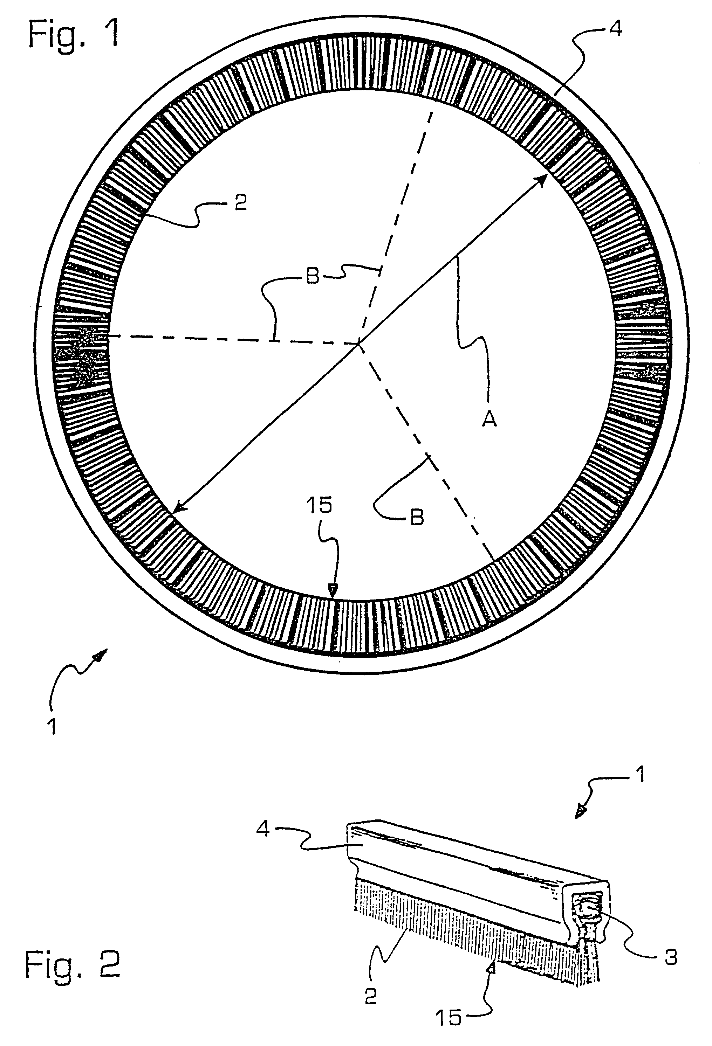

Die Fig. 1 und 2 zeigen eine Bürstendichtung 1 in Draufsicht bzw. einen Teil davon in perspektivischer Ansicht, wie sie bis auf eine Schrägstellung ihrer Borsten 2 fertiggestellt ist. In diesem Zustand der Bürstendichtung 1 enthält sie einen ringförmigen Kern 3, der die Borsten 2 trägt und an dem letztere mittels einer Klemmleiste 4 befestigt sind.

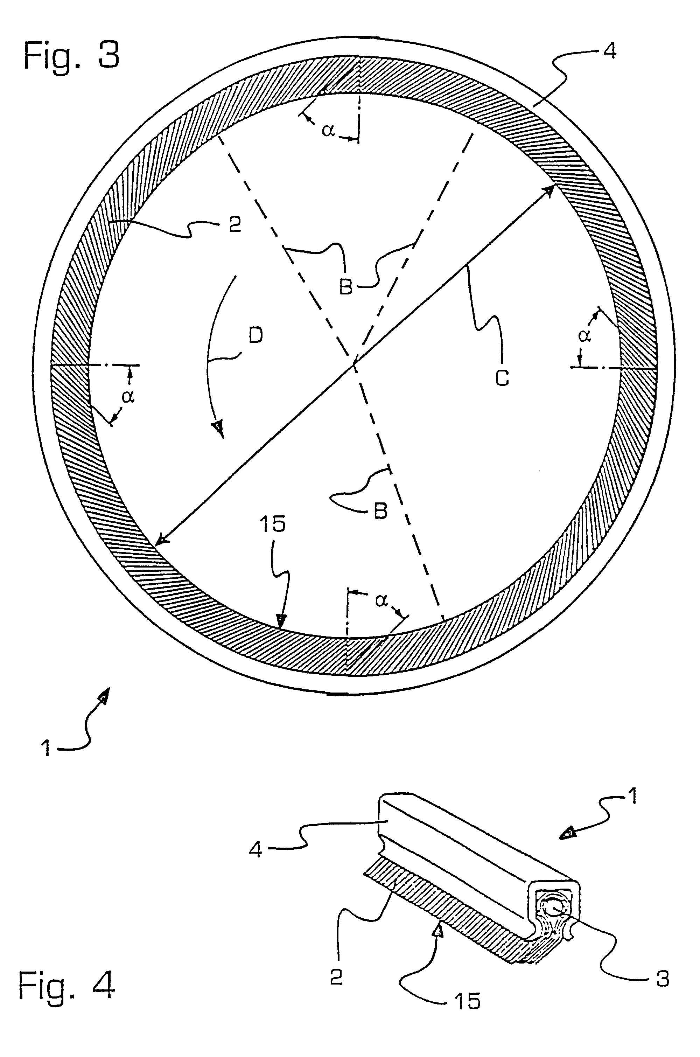

Die Borsten 2 lassen einen Innendurchmesser A der Bürstendichtung 1 frei und haben dementsprechend eine solche Länge, daß sie nach dem Schrägstellen um einen angestrebten Winkel a (siehe Fig. 3) gegenüber den zugeordneten Radien B der Ringform des Kerns 3 zumindest im wesentlichen einen vorgegebenen Innendurchmesser C (siehe Fig. 3) der Bürstendichtung 1 frei lassen. Die Borsten 2 sind an dem Kern 3 der Bürstendichtung 1 beispielsweise mittels einer Klemme 4 befestigt.

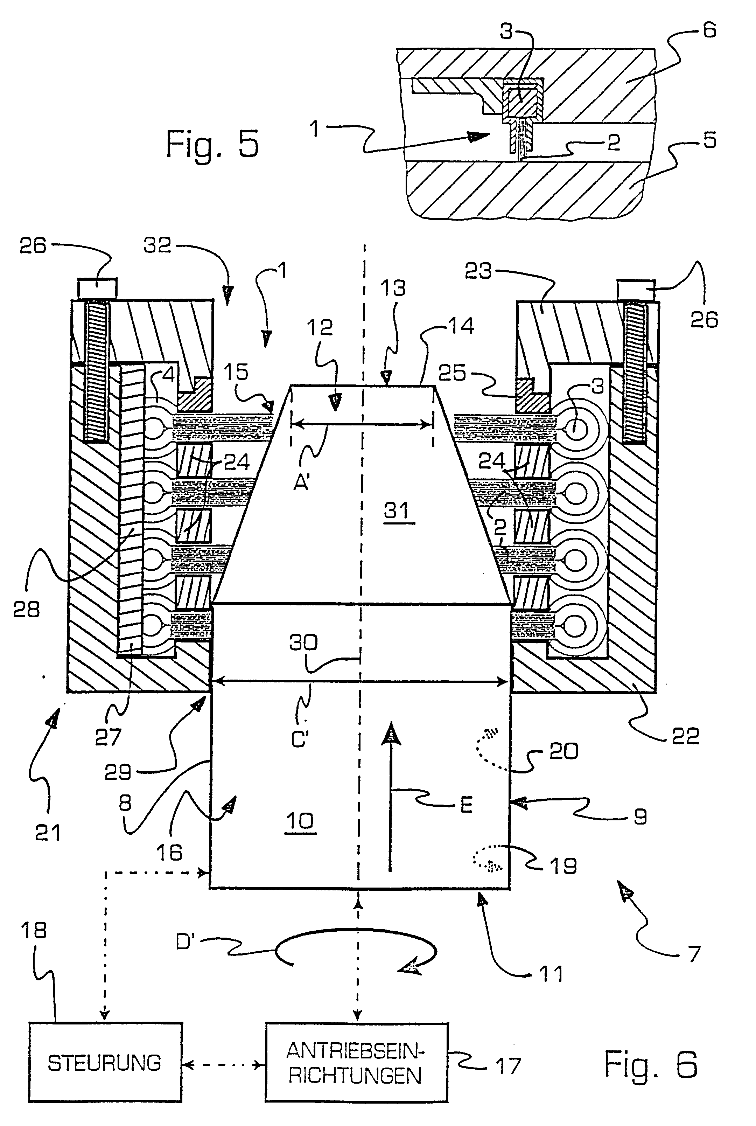

Dieser Innendurchmesser C entspricht wenigstens annähernd dem Außendurchmesser z.B. einer Welle 5 (siehe Fig. 5), die von der Bürstendichtung 1 im Einsatz umfaßt wird. Die ausgehend von dem in den Fig. 1 und 2 gezeigten Zustand der Bürstendichtung 1 beabsichtigte Schrägstellung deren Borsten 2 soll in der durch den Pfeil D angedeuteten Laufrichtung einer solchen Welle 5 erfolgen, wozu die Bürstendichtung 1 an einem Lagergehäuse 6 der Welle 5 angebracht ist, wie in der Fig. 5 schematisch dargestellt ist.

Der angestrebte Endzustand der Borsten 2 der Bürstendichtung 1 zum Einsatz zur Abdichtung der Welle 5 (siehe Fig. 5) ist in deren Draufsicht in der Fig. 3 bzw. deren perspektivischen Teilansicht in der Fig. 4 gezeigt. Der Winkel a, unter dem die Borsten 2 nun zu den Radien B der Ringform der Bürstendichtung 1 verlaufen, führt dazu, daß der zur letztendlichen Verwendung der Bürstendichtung 1 auf der Welle 5 erforderliche Innendurchmesser C eingestellt ist.

In den Fig. 6 bis 8 ist eine Glühvorrichtung 7, mittels der die Bürstendichtung 1 vom in den Fig. 1 und 2 gezeigten Zustand in denjenigen gebracht werden kann, der in den Fig. 3 und 4 dargestellt ist, schematisch im Querschnitt bzw. in zwei Draufsichten gezeigt.

Die Glühvorrichtung 7 ist Bestandteil einer Vorrichtung zum Herstellen von ringförmigen Bürstendichtungen 1 mit schräggestellten Borsten 2 und ist mit Einrichtungen zum Durchführen einer Wärmebehandlung der Borsten 2 versehen. Zu diesem Zweck enthält die Glühvorrichtung 7 einen Glühdorn 8, dessen Außenumfangsfläche 9 eine aufheizbare Glühwand 10 bildet.

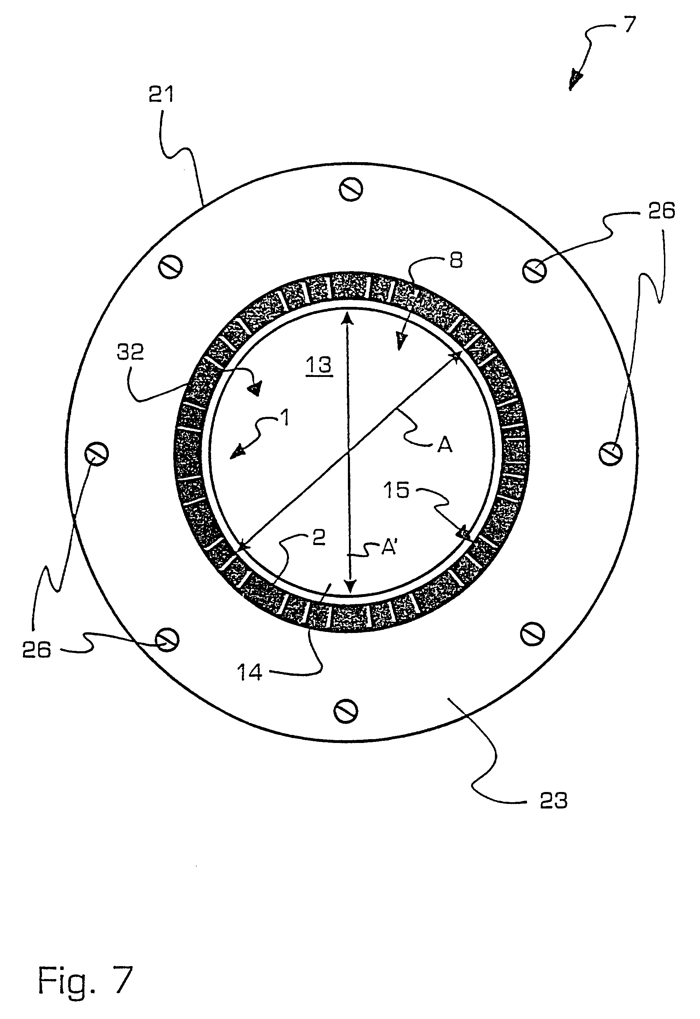

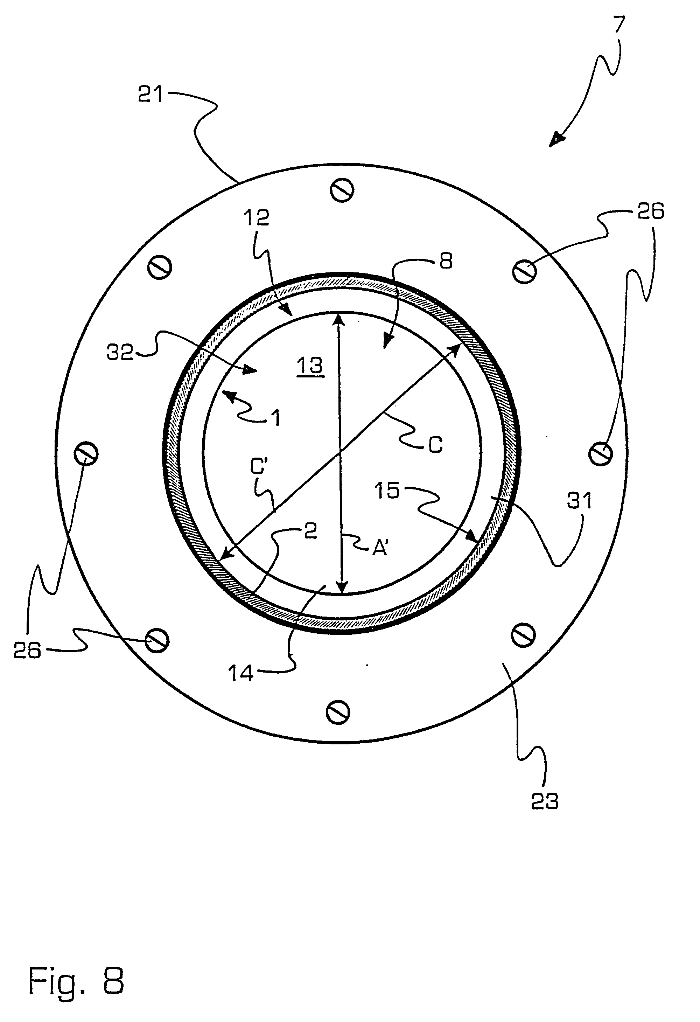

Der Glühdorn 8 ist im wesentlichen zylinderförmig und hat in seinem zum Aufstecken wenigstens einer ringförmigen Bürstendichtung 1 ausgelegten und seinem Montageende 11 in der Glühvorrichtung 7 entgegengesetzt liegenden freien Endbereich 12 einen konusförmigen Aufweitkegel 13. Der Außendurchmesser des letzteren nimmt vom freien Ende 14 des Glühdorns 8 in Richtung auf dessen Montageende 11 in der Glühvorrichtung 7 hin zu. Der maximale Außendurchmesser C' des Glühdorns 8 entspricht zumindest im wesentlichen dem Innendurchmesser C der fertigzustellenden ringförmigen Bürstendichtung 1 mit schräggestellten Borsten 2. Der minimale Außendurchmesser A' des Aufweitkegels 13 des Glühdorns 8 an seinem freien Ende 14 ist wenigstens geringfügig geringer als der Innendurchmesser A, d.h. der freie Durchmesser zwischen den Innenenden 15 der radial verlaufenden Borsten 2 der ringförmigen Bürstendichtung 1. Die einzelnen Durchmesser sind besonders gut in den Fig. 7 und 8 zu erkennen.

Zur Vereinfachung von Herstellung, Montage, Wartung und Betrieb der Glühvorrichtung 7 und des Glühdorns 8 ist letzterer aus zwei getrennten Teilen gebildet, nämlich dem Aufweitkegel 13 und einem Glühzylinder 16. Beim Betrieb der Glühvorrichtung 7 ist es beispielsweise ausreichend, den Glühzylinder 16 auf die erforderliche Temperatur zum Rekristallisationsglühen der Borsten 2 zu bringen. Der Vollständigkeit halber wird noch angegeben, daß das Montageende 11 des Glühdorns 8 durch das vom Aufweitkegel 13 abgewandte Ende des Glühzylinders 16 gebildet ist.

Mit seinem Montageende 11 ist der Glühdorn 8 an Antriebseinrichtungen 17 angeschlossen, die in einem Gehäuse (nicht gezeigt) der Glühvorrichtung 7 untergebracht sind. Die Antriebseinrichtungen 17 sind dazu ausgelegt, den Glühdorn 8 sowohl axial zu verstellen, als auch zu drehen. Die Wahl hierfür geeigneter Antriebseinrichtungen kann dem Fachmann überlassen bleiben, so daß eine detaillierte Beschreibung der Antriebseinrichtungen hier unterlassen werden kann. Es ist lediglich darauf zu achten, daß die Kopplung der Antriebseinrichtungen 17 mit dem Glühdorn 8 so ausgeführt wird, daß die Antriebseinrichtungen 17 durch die hohe Temperatur des Glühdorns 8 bzw. seiner als Glühwand 10 fungierenden Außenumfangsfläche 9 nicht geschädigt werden.

Um die Antriebseinrichtungen 17 zu betreiben und ihre Verstellmöglichkeiten zu koordinieren, ist ferner eine Steuerung 18 vorgesehen. Letztere steuert auch ein Aufheizen des Glühdorns 7 oder seiner Glühwand 8, die Konstanthaltung dessen bzw. deren Temperatur im aufgeheizten Zustand und das Abkühlen. Zum Aufheizen und zur Temperaturkonstanthaltung des Glühdorns 7 oder seiner Glühwand 8 sind geeignete Heizeinrichtungen 19 sowie Temperaturüberwachungseinrichtungen 20 vorgesehen.

Die Glühvorrichtung 7 enthält weiterhin eine Halterung 21, um eine Mehrzahl von Bürstendichtungen 1 aufzunehmen, von denen in der Fig. 6 lediglich beispielsweise vier gezeigt sind. Diese Halterung 21 wird an oder in dem Gehäuse (nicht gezeigt) der Glühvorrichtung 7 stationär befestigt, so daß jede von der Halterung 21 erfaßte Bürstendichtung 1 axial mit dem Glühdorn 8 ausgerichtet ist.

Zum Fassen der Bürstendichtungen 1 enthält die Halterung 21 einen Haltering 22 und einen Spanndeckel 23. Um eine Mehrzahl von axial miteinander ausgerichteten Bürstendichtungen 1 aufnehmen zu können, sind ferner zwischen letztere einsetzbare Distanzteile, wie Distanzringe 24, vorgesehen. Damit für verschiedene Anzahlen von zu bearbeitenden Bürstendichtungen 1 immer dieselbe Halterung 21 verwendet werden kann, können verschiedene Ausgleichsringe 25, von denen in der Fig. 6 nur einer dargestellt ist, als Ausgleichseinrichtungen eingesetzt werden. Damit ist es möglich, die Halterung 21 mit nur einer Bürstendichtung 1 oder z.B. mit bis zu zwanzig Bürstendichtungen 1 zu verwenden.

Nach dem Einsetzen der gewünschten Anzahl von Bürstendichtungen 1 und dazwischen liegenden Distanzringen 24 sowie eines ggf. erforderlichen Ausgleichsrings 25 in den Haltering 22 wird auf letzteren der Spanndeckel 23 aufgesetzt und mittels Schrauben 26 daran befestigt, so daß jede von der Halterung 21 erfaßte Bürstendichtung 1 in der Halterung 21 zentriert und fest gehalten wird. Durch die Halterung 21 ist ferner sichergestellt, daß mehrere darin befestigte Bürstendichtungen 1 axial miteinander ausgerichtet sind.

Damit im Zuge der nachfolgenden Bearbeitung der Bürstendichtungen 1 in der Halterung 21 insbesondere während der Schrägstellung der Borsten 2 der Bürstendichtungen 1 letztere sich nicht insgesamt verdrehen können, enthält die Halterung 21 ferner eine Verdrehsicherung 27. Diese ist bei dem in der Fig. 6 dargestellten Ausführungsbeispiel durch eine Paßfeder 28 gebildet und dazu vorgesehen, die wenigstens eine Bürstendichtung 1 in ihrer Lage mit schräggestellten Borsten 2 insbesondere während des Vorgangs des Schrägstellens der Borsten, aber auch während der Glühbehandlung relativ zur Glühvorrichtung 7 in Drehrichtung gegenüber der Halterung 21 zu fixieren, so daß die Einstellung einer angestrebten Schrägstellung der Borsten 2 bzw. eine eingestellte Schrägstellung der Borsten 2 sichergestellt ist.

Wenn die Halterung 21 mit einer oder mehreren Bürstendichtungen 1 in dem Gehäuse (nicht dargestellt) der Glühvorrichtung 7 montiert wird, ist der Glühdorn 8 durch die Steuerung 18 mittels der Antriebseinrichtungen 17 so eingestellt, daß er vollständig außerhalb der Halterung 21 liegt, und daß die durch seine Außenumfangsfläche 9 im Bereich des Glühzylinders 16 gebildete Glühwand 10 auf Raumtemperatur ist.

Die Steuerung 18 veranlaßt dann zunächst die Antriebseinrichtungen 17 dazu, den Glühdorn 8 mit konstanter Geschwindigkeit in die Halterung 21 hineinzuschieben, wozu der Haltering 22 über eine geeignete Öffnung 29 verfügt, deren Innendurchmesser etwas größer als der Außendurchmesser C' des Glühzylinders 16 ist. Während dieser axialen Verstellung des Glühdorns 8, die in der Fig. 6 durch den Pfeil E angedeutet ist, wird der Glühdorn 8 von den Antriebseinrichtungen 17 gemäß der Steuerung 18 gleichzeitig mit konstanter Drehgeschwindigkeit um seine Achse 30 gedreht, wie durch den Pfeil D' in der Fig. 6 dargestellt ist.

Beim Einfahren des Glühdorns 8 in die Halterung 21 mit den darin gehaltenen Bürstendichtungen 1 unter gleichzeitigem Drehen des Glühdorns 8, wobei dieser immer noch auf Raumtemperatur ist, werden die Borsten 2 dieser Bürstendichtungen 1 schräggestellt. Dabei kommen die freien Enden 15 der Borsten 2 zunächst mit der konusförmigen Außenfläche 31 des Aufweitkegels 13 in Kontakt, so daß die Borsten 2 infolge des Vorschubs des Glühdorns 8 zunehmend in Richtung der Verstellung des letzteren gemäß dem Pfeil E in der Fig. 6 verbogen werden. Simultan damit werden die Borsten 2 der behandelten Bürstendichtungen 1 durch die Drehung des Glühdorns 8 gemäß dem Pfeil D' in der Fig. 6 in der Drehrichtung verbogen. Hierbei ist zu beachten, daß die durch den Pfeil D' angedeutete Drehrichtung des Glühdorns 8 mit der später im Einsatz der Bürstendichtung 1 auftretenden Drehung der Welle 5 übereinstimmt (Pfeil D in der Fig. 3). Soll eine solche Bürstendichtung 1 jedoch an einer entgegengesetzt drehenden Welle verwendet werden, so braucht sie lediglich in einer um ihren Ringdurchmesser um 180 ° gedrehten Stellung eingesetzt werden.

Während des Axialvorschubs des Glühdorns 8 werden somit die Borsten 2 der Bürstendichtungen 1 der Reihe nach erfaßt und in für die angestrebte Schrägstellung geeigneter Weise verbogen, wie dies anhand der beiden mittleren Bürstendichtungen 1 zu erkennen ist, die in der Fig. 6 dargestellt sind. Im weiteren Verlauf des Axialvorschubs des Glühdorns 8 erreicht dann dessen Glühzylinder 16 die Ebenen der einzelnen Bürstendichtungen 1, was in der Fig. 6 für die unterste Bürstendichtung 1 dargestellt ist. Durch den Außendurchmesser C' des Glühzylinders 16 bzw. des Glühdorns 8 in diesem Bereich wird der Innendurchmesser C der Bürstendichtung 1 mit schräggestellten Borsten 2 bestimmt.

Damit der Glühdorn 8 ausreichend weit in die Halterung 21 hineingeschoben werden kann, so daß die Borsten 2 aller Bürstendichtungen 1 in der Halterung 21 an der Außenumfangsfläche 9 des Glühzylinders 16, d.h. an der Glühwand 10 anliegen, kann auch der Spanndeckel 23 mit einer Zentralöffnung 32 versehen sein, die es dem Aufweitkegel 13 erlaubt, durch die Halterung 21 hindurchzugehen, so daß in letzterer nur der Glühzylinder 16 des Glühdorns 8 den Borsten 2 der Bürstendichtungen 1 gegenüberliegt.

Die Antriebseinrichtungen 17 werden von der Steuerung 18 solange zum Vorschub des Glühdorns 8 betrieben, bis alle in der Halterung 12 befindlichen Bürstendichtungen 1 mit den freien Enden 15 ihrer Borsten 2 an der Außenumfangsfläche 9 des Glühzylinders 16 anliegen. Dann wird der Axialvorschub des Glühdorns 8 eingestellt. Der Drehantrieb des Glühdorns 8 wird jedoch noch über eine gewisse Zeitspanne hinweg fortgesetzt, um sicherzustellen, daß alle Borsten 2 der einzelnen Bürstendichtungen in der Halterung 18 innerhalb der durch die jeweilige Bürstendichtung 1 definierten Ebene liegen und darin gegenüber den Radien B der Bürstendichtungen 1 in gewünschter Weise schräggestellt sind. Damit wird vermieden, daß einzelne Borsten 2 noch aus den Ebenen der Bürstendichtungen 1 in Richtung des Pfeils E herausgebogen sind.

Um eine derartige Verbiegung der Borsten 2 besonders sicher auszuschließen, kann der Glühdorn 8 in Richtung des Pfeils E etwas weiter vorgestellt werden, als es für die spätere Temperaturbehandlung erwünscht ist. Anschließend kann der Glühdorn 8 nach wie vor unter gleichzeitiger Drehung in Richtung des Pfeils D' entgegengesetzt zum Pfeil E zurückbewegt werden, um die Borsten 2 entsprechend zu verbiegen. Insbesondere ist es auch möglich, ein derartiges Hin- und Herfahren des Glühdorns 8 mit abnehmender Amplitude um eine Endlage des Glühdorns 8 auszuführen. Wenn der Glühdorn 8 seine Endstellung in der Achsenrichtung erreicht hat, wird seine Axialverstellung eingestellt und die Drehung noch für eine bestimmte Zeit aufrechterhalten, wodurch die Borsten 2 der so behandelten Bürstendichtungen 1 optimal innerhalb der von letzteren aufgespannten Ebenen liegen.

Häufig werden Schrägstellwinkel a der Borsten 2 von ungefähr 45 ° angestrebt. Ohne Einschränkungen können mit der vorliegenden Glühvorrichtung aber auch Schrägstellwinkel a zwischen etwa 30 ° bis ungefähr 60 ° bewerkstelligt werden. Die erreichbaren Schrägstellwinkel a können aber auch zwischen etwa 15 ° bis ungefähr 75 ° oder selbst außerhalb dieses Bereiches realisiert werden. Die Steilheit der Konusform des Aufweitkegels 13 kann ebenso auf die einzustellenden Schrägstellungen der Borsten 2 abgestimmt werden, wie die Vorschub- und Drehgeschwindigkeit des Glühdorns 8.

Nachdem die Steuerung 18 die Antriebseinrichtungen 17 vollständig abgeschaltet hat, betätigt sie die Heizeinrichtungen 19 der Glühvorrichtung 7, um die als Glühwand 10 ausgebildete Außenwand des Glühzylinders 16 auf eine zum Rekristallisationsglühen der Borsten 2 in ihrer Schrägstellung geeignete Temperatur zu bringen. In Abhängigkeit vom Material der Borsten liegt eine derartige Temperatur insbesondere im Bereich zwischen etwa 500 °C und ungefähr 1000 °C. Häufig wird die angestrebte Temperatur zwischen etwa 700 °C und ungefähr 800 °C liegen. Für Metallborsten hat es sich gezeigt, daß die Temperatur zwischen etwa 720 °C und ungefähr 780 °C liegen sollte. Das Erreichen der gewünschten Temperatur wird von der Steuerung 18 durch Temperaturüberwachungseinrichtungen 20, wie Temperaturfühler, erfaßt. Die Steuerung 18 sorgt dann durch Auswertung der Temperaturinformationen von den Temperaturüberwachungseinrichtungen 20 dafür, daß die Glühwand 10 auf der angestrebten und vorzugsweise einstellbaren Temperatur gehalten wird, indem sie die Heizeinrichtungen 19 entsprechend betreibt.

Die Rekristallisationstemperatur wird dann von der Steuerung 18 über beispielsweise eine Stunde hinweg aufrechterhalten. In Abhängigkeit vom Material, aber auch der Geometrieen und lagen der Borsten, kann auch eine Zeitdauer von etwa 45 min bis ungefähr 75 min zur Temperaturkonstanthaltung der Glühwand 10 vorgesehen werden.

Auch noch kürzere Zeiten, wie etwa 30 min, oder noch längere Zeiten, wie ungefähr 90 min, können ohne Einschränkung ausreichend bzw. erforderlich sein.

Nachdem das Rekristallisationsglühen der Borsten 2 abgeschlossen ist, sorgt die Steuerung 18 ggf. für ein definiertes Abkühlen der Borsten 2.

Die somit in ihrer erforderlichen Schrägstellung vorliegenden Borsten 2 der behandelten Bürstendichtungen 1 können schließlich zur Nachbearbeitung des Funktionsdurchmessers der Bürste bzw. der Borsten 2 hinsichtlich ihrer Längen und Formen an den freien Enden 15 Nachbearbeitungseinrichtungen (nicht dargestellt) zugeführt werden. Als vorteilhaft hat es sich erwiesen, hierfür eine Wasserstrahlschneidevorrichtung (nicht dargestellt) zu verwenden, wobei die Bürstendichtungen 1 in der Halterung 21 verbleiben oder daraus entnommen werden können.

Bei dem auch bereits vorstehend im Zusammenhang mit dem Betrieb der Glühvorrichtung 7 abschnittweise erläuterten Verfahren zum Herstellen von ringförmigen Bürstendichtungen 1 mit schräggestellten Borsten 2 kommt es grundsätzlich nur auf die nachfolgend angegebenen Schritte an.

Zunächst muß wenigstens eine ringförmige Bürstendichtung 1 mit radial verlaufenden Borsten 2 einer solchen Länge bereitgestellt werden, die durch Schrägstellung der Borsten 2 gegenüber den Radien B der ringförmigen Bürstendichtung 1 zumindest im wesentlichen zum angestrebten Bürstendurchmesser C führt. Dann wird die wenigstens eine Bürstendichtung 1 und zumindest die aufheizbare Glühwand 10 der Glühvorrichtung 7 relativ zueinander so positioniert, daß die freien Borstenenden 15 bei gebogenen Borsten 2 an der Glühwand 10 anliegen. Gleichzeitig oder nachfolgend erfolgt ein Verdrehen der wenigstens einen Bürstendichtung 1 und zumindest der aufheizbaren Glühwand 10 relativ gegeneinander, bis die Borsten 2 gegenüber den Radien B der ringförmigen Bürstendichtung 1 in deren Ringebene um einen vorgebbaren Winkel a schräggestellt sind. Wenn dieser zustand der Bürstendichtung(en) 1 erreicht ist, wird die Glühwand 10 auf eine vorgebbare Temperatur aufgeheizt, die über eine bestimmte Zeitspanne aufrechterhalten bleibt. Danach kann die wenigstens eine Bürstendichtung 1 von der Glühvorrichtung 7 entfernt werden.

Die Ausführung der Erfindung ist weder verfahrens- noch vorrichtungsmäßig auf kreisringförmige Bürstendichtungen aus Metall beschränkt, wenn auch hier die überwiegende Zahl der Anwendungsfälle zu sehen ist. Ferner ist die Erfindung nicht nur auf die Bearbeitung von Innenbürsten gerichtet. Mit der vorstehend beschriebenen Vorrichtung und dem damit durchführbaren Verfahren können auch Bürstendichtungen mit Außenbürsten oder Innen- und Außenbürsten jeweils mit schräggestellten Borsten hergestellt werden. Es kommt insbesondere auch nicht darauf an, ob bei dem Verstellvorgang von Bürstendichtung und Glühvorrichtung oder Teilen davon relativ zu- oder gegeneinander die Bürstendichtung und/oder die Glühvorrichtung oder Teile davon bewegt werden.

## Patentansprüche

1. Verfahren zum Herstellen von ringförmigen Bürstendichtungen mit schräggestellten Borsten, enthaltend die Schritte:
a) Bereitstellen wenigstens einer ringförmigen Bürstendichtung (1) mit radial verlaufenden Borsten (2) einer solchen Länge, die durch Schrägstellung der Borsten (2) gegenüber den Radien (B) der ringför migen Bürstendichtung (1) zumindest im wesentlichen zum an gestrebten Bürstendurchmesser (C) führt,
b)
1) Positionieren der wenigstens einen Bürstendichtung (1) und zumin dest einer aufheizbaren Glühwand (10) einer Glühvorrichtung (7) relativ zueinander, so daß die freien Borstenenden (15) bei gebogenen Borsten (2) an der Glühwand (10) anliegen,
2) Verdrehen der wenigstens einen Bürstendichtung (1) und zumindest der aufheizbaren Glühwand (10) relativ gegeneinander, bis die Borsten (2) gegenüber den Radien (B) der ringförmigen Bürstendichtung (1) in deren Ringebene um einen vorgebbaren Winkel (a) schräggestellt sind,
c) Aufheizen der Glühwand (10) auf eine vorgebbare Temperatur,
d) Beibehalten der Temperatur der aufheizten Glühwand (10) über eine vorgebbare Zeitspanne, und
e) Entfernen der wenigstens einen Bürstendichtung (1) von der Glühvorrich tung (7).

2. Verfahren nach Anspruch 1, **dadurch gekennzeichnet, daß** der Schritt b) 2) gleichzeitig mit dem Schritt b) 1) durchgeführt wird.

3. Verfahren nach Anspruch 1, **dadurch gekennzeichnet, daß** der Schritt b) 2) durchgeführt wird, nachdem das Positionieren der wenigstens einen Bürstendichtung (1) und der aufheizbaren Glühwand (10) der Glühvorrichtung (7) relativ zueinander beim Schritt b) 1) vollständig abgeschlossen wurde.

4. Verfahren nach einem der vorhergehenden Ansprüche, **dadurch gekennzeichnet, daß** die Borsten (2) beim Schritt b) 2) gegenüber den Radien (B) der ringförmigen Bürstendichtung (1) in deren Ebene um einen Winkel (a) zwischen etwa 15 ° bis ungefähr 75 °, insbesondere zwischen etwa 30 ° bis ungefähr 60 °, und vorzugsweise von ungefähr 45 ° schräggestellt werden.

5. Verfahren nach einem der vorhergehenden Ansprüche, **dadurch gekennzeichnet, daß** die aufheizbare Glühwand (10) beim Schritt c) auf eine Temperatur zwischen etwa 500 °C und ungefähr 1000 °C, insbesondere zwischen etwa 700 °C und ungefähr 800 °C, und vorzugsweise zwischen etwa 720 °C und ungefähr 780 °C aufgeheizt wird.

6. Verfahren nach einem der vorhergehenden Ansprüche, **dadurch gekennzeichnet, daß** die beim Schritt c) erreichte Temperatur der aufgeheizten Glühwand (10) beim Schritt d) für eine Zeitspanne von etwa 30 min bis ungefähr 90 min, insbesondere etwa 45 min bis ungefähr 75 min und vorzugsweise ungefähr 60 min beibehalten wird.

7. Verfahren nach einem der vorhergehenden Ansprüche, **dadurch gekennzeichnet, daß** vor dem Schritt c) des Aufheizens der Glühwand (10) eine Mehrzahl von gemäß Schritt a) bereitgestellten Bürstendichtungen (1) und die aufheizbare Glühwand (10) der Glühvorrichtung (7) nach Schritt b) 1) relativ zueinander positioniert sowie nach Schritt b) 2) gleichzeitig oder danach diese Bürstendichtungen (1) und zumindest die aufheizbare Glühwand (10) relativ gegeneinander verdreht werden, bis die Borsten (2) gegenüber den Radien (B) der ringförmigen Bürstendichtung (1) in deren Ringebene um einen vorgebbaren Winkel (a) schräggestellt sind.

8. Verfahren nach Anspruch 7, **dadurch gekennzeichnet, daß** die Mehrzahl von Bürstendichtungen (1) etwa 10 bis 20 Bürstendichtungen enthält.

9. Vorrichtung zum Herstellen von ringförmigen Bürstendichtungen mit schräggestellten Borsten, mit Einrichtungen zum Durchführen einer Wärmebehandlung der Borsten, **dadurch gekennzeichnet, daß** eine Glühvorrichtung (7) mit zumindest einer aufheizbaren Glühwand (10) vorgesehen ist, die zusammen mit wenigstens einer ringförmigen Bürstendichtung (1) mit radial verlaufenden Borsten (2) relativ zueinander so positionierbar ist, daß die freien Borstenenden (15) bei gebogenen Borsten (2) an der aufheizbaren Glühwand (10) der Glühvorrichtung (7) anliegen, und die dazu ausgelegt ist, daß sie und die wenigstens eine Bürstendichtung (1) gleichzeitig mit dem oder anschließend an das Positionieren relativ gegeneinander so verdrehbar sind, daß die Borsten (2) gegenüber den Radien (B) der ringförmigen Bürstendichtung (1) in deren Ebene um einen vorgebbaren Winkel (a) schrägstellbar sind.

10. Vorrichtung nach Anspruch 9, **dadurch gekennzeichnet, daß** die aufheizbare Glühwand (10) die Außenwand eines Glühdorns (8) ist, auf den die wenigstens eine ringförmige Bürstendichtung (1) aufsetzbar ist.

11. Vorrichtung zum Herstellen von ringförmigen Bürstendichtungen mit schräggestellten Borsten nach Anspruch 10, **dadurch gekennzeichnet, daß** der Glühdorn (8) im wesentlichen zylinderförmig ist und in seinem zum Aufstecken der wenigstens einen ringförmigen Bürstendichtung (1) ausgelegten und seinem Montageende (11) in der Glühvorrichtung (7) entgegengesetzt liegenden freien Endbereich (12) einen konusförmigen Aufweitkegel (13) hat, dessen Außendurchmesser vom freien Ende (14) des Glühdorns (8) in Richtung auf dessen Montageende (11) in der Glühvorrichtung (7) hin zunimmt, wobei der maximale Außendurchmesser (C') des Glühdorns (8) zumindest im wesentlichen dem Innendurchmesser (C) der fertigzustellenden ringförmigen Bürstendichtung (1) mit schräggestellten Borsten (2) entspricht.

12. Vorrichtung nach einem der Ansprüche 9 bis 11, **dadurch gekennzeichnet, daß** die Glühvorrichtung (7) eine Halterung (21) zum Fassen der wenigstens einen Bürstendichtung (1) enthält.

13. Vorrichtung nach Anspruch 12, **dadurch gekennzeichnet, daß** die Halterung (21) zum Aufnehmen einer Mehrzahl von axial miteinander ausrichtbaren Bürstendichtungen (1) zwischen letztere einsetzbare Distanzteile, wie Distanzringe (24), enthält.

14. Vorrichtung nach einem der Ansprüche 9 bis 13, **dadurch gekennzeichnet, daß** die Glühvorrichtung (7) insbesondere steuerbare Antriebseinrichtungen (17) enthält, die zum Verstellen der wenigstens einen Bürstendichtung (1) und der aufheizbaren Glühwand (10) der Glühvorrichtung (7) relativ zueinander ausgelegt sind, um die wenigstens eine Bürstendichtung (1) und die aufheizbare Glühwand (10) der Glühvorrichtung (7) relativ zueinander zu positionieren und/oder um die wenigstens eine Bürstendichtung (1) und zumindest die aufheizbare Glühwand (10) relativ gegeneinander zu verdrehen, bis die Borsten (2) gegenüber den Radien (B) der ringförmigen Bürstendichtung (1) in deren Ebene um einen vorgebbaren Winkel (a) schräggestellt sind, und daß die Antriebseinrichtungen (17) insbesondere zum Verstellen der aufheizbaren Glühwand (10) sowie vorzugsweise zum Verstellen mit konstantem Vorschub und/oder konstanter Drehzahl ausgelegt sind.

15. Vorrichtung nach einem der Ansprüche 9 bis 14, **dadurch gekennzeichnet, daß** die Glühvorrichtung (7) insbesondere steuerbare Heizeinrichtungen (19) enthält, mittels derer zumindest die aufheizbaren Glühwand (10) der Glühvorrichtung auf eine Temperatur zwischen etwa 500 °C und ungefähr 1000 °C, insbesondere zwischen etwa 700 °C und ungefähr 800 °C, und vorzugsweise zwischen etwa 720 °C und ungefähr 780 °C aufheizbar ist.

16. Vorrichtung zum Herstellen von ringförmigen Bürstendichtungen mit schräggestellten Borsten nach einem der Ansprüche 9 bis15, **dadurch gekennzeichnet, daß** die Glühvorrichtung (7) eine Steuerung (18) enthält, die das Aufheizen der aufheizbaren Glühwand (10) und das Beibehalten der dabei angestrebten Temperatur für eine Zeitspanne von etwa 30 min bis ungefähr 90 min, insbesondere etwa 45 min bis ungefähr 75 min und vorzugsweise ungefähr 60 min steuert.

17. Vorrichtung nach Anspruch 16, **dadurch gekennzeichnet, daß** die Steuerung (18) auch einen Abkühlvorgang der aufheizbaren Glühwand (10) der Glühvorrichtung steuert.

18. Vorrichtung nach einem der Ansprüche 9 bis 17, **dadurch gekennzeichnet, daß** Nachbearbeitungseinrichtungen zur Nachbearbeitung des Funktionsdurchmessers der Bürste der wenigstens einen Bürstendichtung (1) nach der Glühbehandlung vorgesehen ist.

19. Vorrichtung zum Herstellen von ringförmigen Bürstendichtungen mit schräggestellten Borsten nach einem der Ansprüche 9 bis18, **dadurch gekennzeichnet, daß** eine Verdrehsicherung (27) vorgesehen ist, die die wenigstens eine Bürstendichtung (1) relativ zur Glühvorrichtung (7) in ihrer Lage mit schräggestellten Borsten (2) hält, wobei die Verdrehsicherung (27) einerseits an der Glühvorrichtung (7) oder der wenigstens einen Bürstendichtung (1) oder ggf. insbesondere an der Halterung (21) und andererseits an der wenigstens einen Bürstendichtung (1) bzw. der Glühvorrichtung (7) angreift.

## Claims

1. Method for the production of annular brush seals with obliquely set bristles, comprising the following steps:
a) preparation of at least one annular brush seal (1) with bristles (2) that extend radially and are of length such that when the bristles (2) are positioned obliquely relative to the radii (B) of the annular brush seal (1), the desired brush diameter (C) is produced at least approximately;
b)
1) positioning of the at least one brush seal (1) and at least one heatable surface (10) of a heating device (7) relative to one another, in such manner that the free ends (15) of the bristles are in contact with the heating wall (10) when the bristles (2) are bent;
2) rotation of the at least one brush seal (1) and at least the heatable surface (10) relative to one another, until the bristles (2) are positioned obliquely with respect to the radii (B) of the annular brush seal (1) in their ring plane, by a specifiable angle (**a**);
c) heating of the heater surface (10) to a specifiable temperature;
d) maintenance of the temperature of the heated surface (10) for a specifiable time, and
e) removal of the at least one brush seal (I) from the heating device (7).

2. Method according to Claim 1,
**characterised in that**
step b) 2) is carried out at the same time as step b) 1).

3. Method according to Claim 1,
**characterised in that**
step b) 2) is carried out once the positioning of the at least one brush seal (1) and of the heatable surface (10) of the heating device (7) relative to one another in step b) 1) has been fully completed.

4. Method according to any of the preceding claims,
**characterised in that**
in step b) 2) the bristles (2) are positioned obliquely relative to the radii (B) of the annular brush seal (1) in the plane thereof, inclined by an angle (**a**) of between about 15° and approximately 75°, in particular between about 30° and approximately 60°, and preferably approximately 45°.

5. Method according to any of the preceding claims,
**characterised in that**
the heatable surface (10) is heated in step c) to a temperature between about 500°C and approximately 1000°C, in particular between about 700°C and approximately 800°C, and preferably between about 720°C and approximately 780°C.

6. Method according to any of the preceding claims,
**characterised in that**
the temperature of the heated surface (10) reached in step c) is held in step d) for a time of between about 30 min and approximately 90 min, in particular about 45 min to approximately 75 min and preferably approximately 60 min.

7. Method according to any of the preceding claims,
**characterised in that**
before step c) in which the heating surface (10) is heated, a number of brush seals (1) prepared in accordance with step a) and the heatable surface (10) of the heating device (7) are positioned relative to one another as in step b) 1) and, at the same time or thereafter in accordance with step b) 2), these brush seals (1) and at least the heatable surface (10) are rotated relative to one another until the bristles (2) are positioned obliquely with respect to the radii (B) of the annular brush seal (1) in their ring plane, by a specifiable angle (**a**).

8. Method according to Claim 7,
**characterised in that**
the number of brush seals (1) amounts to about 10 to 20 brush seals.

9. Device for the production of annular brush seals with obliquely set bristles, comprising means for carrying out a heat treatment of the bristles,
**characterised in that**
a heating device (7) with at least one heatable surface (10) is provided, which, together with at least one annular brush seal (1) having radially extending bristles (2), can be so positioned relative to one another that the free ends (15) of the bristles are in contact with the heatable surface (10) of the heating device (7) when the bristles (2) are bent, and which is designed in such manner that at the same time as or after the positioning operation, it and the at least one brush seal (1) can be rotated relative to one another so that the bristles (2) can be positioned obliquely relative to the radii (B) of the annular brush seal (1) in the plane thereof, by a specifiable angle (**a**).

10. Device according to Claim 9,
**characterised in that**
the heatable surface (10) is the outer wall of a heating mandrel (8), on which the at least one annular brush seal (1) can be placed.

11. Device for the production of annular brush seals with obliquely set bristles according to Claim 10,
**characterised in that**
the heating mandrel (8) is essentially cylindrical and, at its free end area (12) designed for the at least one annular brush seal (1) to be put on and located opposite the end (11) whereby it is assembled to the heating device (7), it has a conical tapered portion (13) whose outer diameter increases from the free end (14) of the heating mandrel (8) in the direction towards its assembly end (11) to the heating device (7), such that the maximum outer diameter (C') of the heating mandrel (8) corresponds essentially to the inside diameter (C) of the annular brush seal (1) to be produced with obliquely set bristles (2).

12. Device according to any of Claims 9 to 11,
**characterised in that**
the heating device (7) comprises a holder (21) to hold the at least one brush seal (1).

13. Device according to Claim 12,
**characterised in that**
to be able to receive a number of brush seals (1) that can be axially aligned with one another, the holder (21) comprises spacers such as distance rings (24) that can be positioned between the brush seals.

14. Device according to any of Claims 9 to 13,
**characterised in that**
the heating device (7) comprises drive mechanisms (17), in particular ones that can be controlled, which are designed to enable the at least one brush seal (1) and the heatable surface (10) of the heating device (7) to be displaced relative to one another, so as to position the at least one brush seal (1) and the heatable surface (10) of the heating device (7) relative to one another and/or so that the at least one brush seal (1) and at least the heatable surface (10) can be rotated relative to one another until the bristles (2) are positioned obliquely with respect to the radii (B) of the annular brush seal (1) in the plane thereof by a specifiable angle (a), and the said drive mechanisms (17) are designed in particular to displace the heatable surface (10) and preferably to displace it with a constant thrust and/or at constant rotation speed.

15. Device according to any of Claims 9 to 14,
**characterised in that**
the heating device (7) comprises in particular controllable heating means (19), by virtue of which at least the heatable surface (10) of the heating device can be heated to a temperature between about 500°C and approximately 1000°C, in particular between about 700°C and approximately 800°C, and preferably between about 720°C and approximately 780°C.

16. Device for the production of annular brush seals with obliquely set bristles according to any of Claims 9 to 15,
**characterised in that**
the heating device (7) comprises a control unit (18), which controls the heating of the heatable surface (10) and maintains the desired temperature for a time of about 30 min to approximately 90 min, in particular about 45 min to approximately 75 min and preferably approximately 60 min.

17. Device according to Claim 16,
**characterised in that**
the control unit (18) also controls a cooling process of the heatable surface (10) of the heating device.

18. Device according to any of Claims 9 to 17,
**characterised in that**
finishing equipment is provided for the final dressing of the functional diameter of the brush of the at least one brush seal (1) after its heat treatment.

19. Device for the production of annular brush seals with obliquely set bristles according to any of Claims 9 to 18,
**characterised in that**
rotation securing means (27) are provided, which hold the at least one brush seal (1) relative to the heating device (7) in its position with obliquely set bristles (2), such that the rotation securing means (27) engage on the one hand with the heating device (7) or the at least one brush seal (1) or possibly in particular with the holder (21), and on the other hand with the at least one brush seal (1) or the heating device (7), respectively.

## Revendications

1. Procédé pour la fabrication de joints à brosse de forme annulaire avec des poils placés en position inclinée, comprenant les étapes suivantes :
a) mise à disposition d'au moins un joint à brosse de forme annulaire (1) avec des poils placés en direction radiale (2) et ayant une longueur telle qu'en position inclinée des poils (2) par rapport aux rayons (B) du joint à brosse de forme annulaire (1) elle conduise au moins sensiblement au diamètre souhaité (C) de la brosse,
b)
1) positionnement relatif de l'au moins un joint à brosse (1) et d'au moins une paroi de formage à chaud pouvant être chauffée (10) d'un dispositif de formage à chaud (7) de manière à ce que les extrémités libres des poils (15) s'appuient sur la paroi de formage à chaud (10) lorsque les poils (2) sont cintrés,
2) rotation relative de l'au moins un joint à brosse (1) et au moins de la paroi de formage à chaud pouvant être chauffée (10) jusqu'à ce que les poils (2) aient, par rapport aux rayons (B) du joint à brosse de forme annulaire (1) et au plan d'anneau de celui-ci, pris une position inclinée présentant un angle (α) qui peut être prédéterminé,
c) chauffage de la paroi de formage à chaud (10) à une température pouvant être prédéterminée,
d) maintien de la température de la paroi de formage à chaud qui a été chauffée (10) sur une durée pouvant être prédéterminée et
e) éloignement de l'au moins un joint à brosse (1) du dispositif de formage à chaud (7).

2. Procédé selon la revendication 1, **caractérisé en ce que** l'étape b) 2) est réalisée en même temps que l'étape b) 1).

3. Procédé selon la revendication 1, **caractérisé en ce que** l'étape b) 2) est réalisée après l'achèvement complet au cours de l'étape b) 1) du positionnement relatif de l'au moins un joint à brosse (1) et de la paroi de formage à chaud pouvant être chauffée (10) du dispositif de formage à chaud (7).

4. Procédé selon l'une des revendications précédentes, **caractérisé en ce que** lors de l'étape b) 2) les poils (2) sont placés par rapport aux rayons (B) du joint à brosse de forme annulaire (1), dans le plan de celui-ci, dans une position inclinée présentant un angle (α) situé entre à peu près 15° et environ 75°, en particulier entre à peu près 30° et environ 60°, et de préférence d'une valeur d'à peu près 45°.

5. Procédé selon l'une des revendications précédentes, **caractérisé en ce que** lors de l'étape c), la paroi de formage à chaud pouvant être chauffée (10) est portée à une température située entre à peu près 500°C et environ 1000°C, en particulier entre à peu près 700°C et environ 800°C, et de préférence entre à peu près 720°C et environ 780 °C.

6. Procédé selon l'une des revendications précédentes, **caractérisé en ce que** la température de la paroi de formage à chaud chauffée (10) obtenue lors de l'étape c) est maintenue lors de l'étape d) pendant une durée d'à peu près 30 min jusqu'à environ 90 min, en particulier d'à peu près 45 min jusqu'à environ 75 min, et de préférence pendant à peu près 60 min.

7. Procédé selon l'une des revendications précédentes, **caractérisé en ce que** qu'avant l'étape c) de chauffage de la paroi de formage à chaud (10) une pluralité de joints à brosse (1) mis à disposition selon l'étape a) et la paroi de formage à chaud pouvant être chauffée (10) du dispositif de formage à chaud (7) font l'objet d'un positionnement mutuel selon l'étape b) 1) et **en ce, que** simultanément à cette opération ou après elle, ces joints à brosse (1) et au moins la paroi de formage à chaud pouvant être chauffée (10) sont mis en rotation relative selon l'étape b) 2), et ceci jusqu'à ce que les poils (2) aient, par rapport aux rayons (B) du joint à brosse de forme annulaire (1), dans le plan d'anneau de celui-ci, pris une position inclinée présentant un angle (α) qui peut être prédéterminé.

8. Procédé selon la revendication 7, **caractérisé en ce que** la pluralité de joints à brosse de forme circulaire (1) est constituée d'environ 10 à 20 joints à brosse.

9. Dispositif pour la fabrication de joints à brosse de forme circulaire avec des poils placés en position inclinée avec des installations pour la réalisation d'un traitement thermique des poils, **caractérisé en ce qu'**il est prévu un dispositif de formage à chaud (7) avec au moins une paroi de formage à chaud pouvant être chauffée (10), qui peut faire l'objet d'un positionnement relatif, par rapport à au moins un joint à brosse de forme annulaire (1) avec des poils s'étendant en direction radiale (2), tel que les extrémités libres des poils (15) s'appuient sur la paroi de formage à chaud pouvant être chauffée (10) du dispositif de formage à chaud (7) lorsque les poils (2) sont cintrés, et qui est conçu de manière à ce que lui-même et l'au moins un joint à brosse (1) puissent, en même temps que le positionnement ou après celui-ci, être mis en rotation relative de manière telle que les poils (2) puissent, par rapport aux rayons (B) du joint à brosse de forme circulaire (1), dans le plan de celui-ci, être placés dans une position inclinée présentant un angle (α) qui peut être prédéterminé.

10. Dispositif selon la revendication 9, **caractérisé en ce que** la paroi de formage à chaud pouvant être chauffée (10) est la paroi extérieure d'une broche de formage à chaud (8), sur laquelle peut être placé l'au moins un joint à brosse de forme annulaire (1).

11. Dispositif pour la fabrication de joints à brosse de forme annulaire avec des poils placés en position inclinée selon la revendication 10, **caractérisé en ce que** la broche de formage à chaud (8) a sensiblement une forme cylindrique et possède, dans sa zone terminale (12) libre conçue pour la mise en place de l'au moins un joint à brosse de forme annulaire (1) et placée à l'opposé de son extrémité de montage (11) dans le dispositif de formage à chaud (7), un élément d'évasement (13) en forme de cône, dont le diamètre extérieur augmente depuis l'extrémité libre (14) de la broche de formage à chaud (8) en direction de son extrémité de montage (11) dans le dispositif de formage à chaud (7), le diamètre extérieur maximal (C') de la broche de formage à chaud (8) correspondant au moins sensiblement au diamètre intérieur (C) du joint à brosse de forme annulaire (1) avec des poils placés en position inclinée (2) qui doit être fabriqué.

12. Dispositif selon l'une des revendications 9 à 11, **caractérisé en ce que** le dispositif de formage à chaud (7) comprend un support (21) pour recevoir l'au moins un joint à brosse (1).

13. Dispositif selon la revendication 12, **caractérisé en ce que**, pour recevoir une pluralité de joints à brosse (1) pouvant être alignés mutuellement en direction axiale, le support (21) comprend des entretoises, telles que des bagues d'écartement (24), pouvant être placées entre ces joints.

14. Dispositif selon l'une des revendications 9 à 13, **caractérisé en ce que** le dispositif de formage à chaud (7) comprend en particulier des dispositifs d'entraînement pouvant être commandés (17), qui sont conçus pour le réglage relatif de l'au moins un joint à brosse (1) et de la paroi de formage à chaud pouvant être chauffée (10) du dispositif de formage à chaud (7), qui servent à réaliser un positionnement relatif de l'au moins un joint à brosse (1) et de la paroi de formage à chaud pouvant être chauffée (10) du dispositif de formage à chaud (7) et/ou qui servent à assurer une rotation relative de l'au moins un joint à brosse (1) et d'au moins la paroi de formage à chaud pouvant être chauffée (10), et ceci jusqu'à ce que les poils (2) aient, par rapport aux rayons (B) du joint à brosse de forme annulaire (1), dans le plan de celui-ci, pris une position inclinée présentant un angle (α) qui peut être prédéterminé, et **en ce que** les dispositifs d'entraînement (17) sont conçus en particulier pour le réglage de la paroi de formage à chaud pouvant être chauffée (10) ainsi que de préférence pour le réglage avec une avance constante et/ou avec un régime de rotation constant.

15. Dispositif selon l'une des revendications 9 à 14, **caractérisé en ce que** le dispositif de formage à chaud (7) comprend en particulier des dispositifs de chauffage pouvant être commandés (19), au moyen desquels au moins la paroi de formage à chaud pouvant être chauffée (10) du dispositif de formage à chaud peut être chauffée à une température située entre à peu près 500°C et environ 1000°C, en particulier entre à peu près 700°C et environ 800°C, et de préférence entre à peu près 720°C et environ 780°C.

16. Dispositif pour la fabrication de joints à brosse de forme annulaire avec des poils placés en position inclinée selon l'une des revendications 9 à 15, **caractérisé en ce que** le dispositif de formage à chaud (7) comprend un dispositif de commande (18), qui commande le chauffage de la paroi de formage à chaud pouvant être chauffée (10) et le maintien de la température souhaitée dans ce cas pendant une durée d'à peu près 30 min à environ 90 min, en particulier d'à peu près 45 min jusqu'à environ 75 min, et de préférence pendant à peu près 60 min.

17. Dispositif selon la revendication 16, **caractérisé en ce que** la commande (18) commande aussi une procédure de refroidissement de la paroi de formage à chaud pouvant être chauffée (10) du dispositif de formage à chaud.

18. Dispositif selon l'une des revendications 9 à 17, **caractérisé en ce que** des dispositifs de traitement additionnel sont prévus pour la reprise après le traitement de formage à chaud du diamètre fonctionnel de la brosse de l'au moins un joint à brosse (1).

19. Dispositif pour la fabrication de joints à brosse de forme annulaire avec des poils placés en position inclinée selon l'une des revendications 9 à 18, **caractérisé en ce qu'**il est prévu une sécurité de rotation (27), qui maintient l'au moins un joint à brosse (1) par rapport au dispositif de formage à chaud (7) dans sa position où les poils (2) sont placés inclinés, la sécurité de rotation (27) agissant d'une part sur le dispositif de formage à chaud (7) ou sur l'au moins un joint à brosse (1) ou le cas échéant en particulier sur le support (21) et d'autre part sur l'au moins un joint à brosse (1) ou sur le dispositif de formage à chaud (7).
